# EUROPÄISCHE PATENTSCHRIFT

(11) **EP 2 888 075 B1**
(45) Veröffentlichungstag und Bekanntmachung des Hinweises auf die Patenterteilung: **08.05.2019**
(21) Anmeldenummer: 13740006.5
(22) Anmeldetag: 24.07.2013
(51) Int. Cl.: B23K 1/20, H01R 13/02, H01R 43/02, H05B 3/06, H05B 3/84, B23K 35/26, B23K 1/00

(54) **SCHEIBE MIT ELEKTRISCHEM ANSCHLUSSELEMENT**
PANE WITH ELECTRIC CONNECTION ELEMENT
DISQUE DOTÉ D'UN ÉLÉMENT DE RACCORDEMENT ÉLECTRIQUE

(30) Priorität: 24.08.2012 EP 12181663
(43) Veröffentlichungstag der Anmeldung: 01.07.2015
(73) Patentinhaber: Saint-Gobain Glass France, 92400 Courbevoie (FR)
(72) Erfinder: RATEICZAK, Mitja, 52146 Würselen (DE); REUL, Bernhard, 52134 Herzogenrath (DE); SCHMALBUCH, Klaus, 84220 Goult (FR)
(74) Vertreter: Gebauer, Dieter Edmund
(86) Internationale Anmeldenummer: PCT/EP2013/065561
(87) Internationale Veröffentlichungsnummer: WO 2014/029576

(56) Entgegenhaltungen:
- WO-A1-00/58051
- WO-A1-2011/145591
- US-A1- 2005 045 700
- US-A1- 2008 175 748
- SPIEKERMANN P: "LEGIERUNGEN - EIN BESONDERES PATENTRECHTLICHES PROBLEM? - LEGIERUNGSPRUEFUNG IM EUROPAEISCHEN PATENTAMT -", MITTEILUNGEN DER DEUTSCHEN PATENTANWAELTE, HEYMANN, KOLN, DE, 1 January 1993 (1993-01-01), pages 178-190, XP000961882, ISSN: 0026-6884

## Beschreibung

Die Erfindung betrifft eine Scheibe mit einem elektrischen Anschlusselement, ein wirtschaftliches und umweltfreundliches Verfahren zu deren Herstellung und deren Verwendung.

Die Erfindung betrifft weiter eine Scheibe mit einem elektrischen Anschlusselement für Fahrzeuge mit elektrisch leitfähigen Strukturen wie beispielsweise Heizleitern oder Antennenleitern. Die elektrisch leitfähigen Strukturen sind üblicherweise über angelötete elektrische Anschlusselemente mit der Bordelektrik verbunden. Aufgrund unterschiedlicher thermischer Ausdehnungskoeffizienten der verwendeten Materialien treten mechanische Spannungen bei der Herstellung und im Betrieb auf, welche die Scheiben belasten und den Bruch der Scheibe hervorrufen können.

Bleihaltige Lote weisen eine hohe Duktilität auf, die auftretende mechanische Spannungen zwischen elektrischem Anschlusselement und der Scheibe durch plastische Deformierung kompensieren können. Allerdings müssen aufgrund der Altauto-Richtlinie 2000/53/EG innerhalb der EG bleihaltige Lote durch bleifreie Lote ersetzt werden. Die Richtlinie wird zusammenfassend mit dem Kürzel ELV (End of life vehicles) bezeichnet. Das Ziel ist dabei, im Zuge der massiven Ausweitung von Wegwerfelektronik äußerst problematische Bestandteile aus den Produkten zu verbannen. Die betroffenen Substanzen sind Blei, Quecksilber, Cadmium und Chrom. Das betrifft unter anderem die Durchsetzung von bleifreien Lötmitteln in elektrischen Anwendungen auf Glas und die Einführung entsprechender Ersatzprodukte hierzu.

Aus elektronischen Anwendungen bekannte bleifreie Lotzusammensetzungen sind für die Anwendung auf Glas nicht geeignet. Einerseits ist auf Glas eine höhere Haftfestigkeit erforderlich, die mit diesen Lotzusammensetzungen nicht erreicht wird. Zum anderen verfügen die für elektronische Substrate verwendeten flexiblen Lote über einen höheren thermischen Ausdehnungskoeffizienten, wodurch es bei größeren Temperaturschwankungen sehr leicht zum Bruch des Glases kommt.

Zur Anwendung auf Glas sind beispielsweise bleifreie Metalllegierungen enthaltend Silber, Zinn, Zink, Indium, Bismut und/oder Gallium offenbart. EP 2 339 894 A1 beschreibt die Verwendung von Bismut-Legierungen zum Verlöten einer leitfähigen Schicht auf einer Scheibe mit einem Anschlusselement. Da derartige Bismut-Legierungen jedoch sehr spröde sind, sind diese nicht optimal zur Verlötung in Kombination mit Glassubstraten geeignet und es treten zu hohe Zugspannungen an der Lötstelle auf.

Eine andere Möglichkeit zur Reduzierung der Zugspannungen an der Lötstelle ist die Beimengung von grobkörnigen Zusätzen. US 2006/0147337 A1 offenbart beispielsweise eine Zinn-Silber-Legierung, der eine granulatförmige Nickel-Eisen-Legierung beigemengt ist. Dadurch kann der thermische Ausdehnungskoeffizient des Lotes entscheidend gesenkt werden.

Des Weiteren ist die Verwendung der verschiedensten Indium-Legierungen zur Kontaktierung von Glas bekannt. Indium hat sich als besonders geeignetes Material erwiesen, da es dank seiner geringen Härte die Zugspannungen an der Lötstelle verringert. WO 2000058051 offenbart eine Legierung enthaltend 65 Gew.-% Indium, 30 Gew.-% Zinn, 4,5 Gew.-% Silber sowie 0,5 Gew.-% Kupfer. Die beschriebene Lotzusammensetzung hat durch den hohen Indiumanteil einen vergleichsweise niedrigen Schmelzpunkt von ca. 121° C, wodurch ein zu hoher Wärmeübertrag auf das Glassubstrat während des Lötvorgangs verhindert werden kann. Gleichzeitig verschlechtert ein solch niedriger Schmelzpunkt jedoch die Alterungsbeständigkeit der Lotmasse, so dass bei starker Erwärmung der Lötstelle, beispielsweise bei Sonneneinstrahlung und gleichzeitiger Inbetriebnahme der Heizfunktion der Scheibe, eine Beschädigung der Lötstelle erfolgen kann. Des Weiteren sind Inhomogenitäten der Lotmasse, wie beispielsweise Einkapselungen des Flussmittels, zu beobachten, die je nach ihrer Ausdehnung ein strukturelles Versagen der Lötverbindung verursachen könnten. Ferner zeigt diese Lotzusammensetzung ein ungünstiges Benetzungsverhalten, woraus die schlechte Homogenität der Lotmasse sowie eine Bildung von Lunkern resultieren.

Das US-Patent Nr. 2008/175748 A1 zeigt eine Lotmasse mit einem Legierungsgehalt von 13-65 Gew.-% Indium, 30-85 Gew.-% Zinn, 1-10 Gew.-% Silber und 0,25-0,75 Gew.-% Kupfer.

Die Aufgabe der vorliegenden Erfindung ist es, eine verbesserte Scheibe mit Anschlusselement, die die Nachteile des Stands der Technik nicht aufweist sowie ein umweltfreundliches Verfahren zu deren Herstellung bereitzustellen.

Die Aufgabe der vorliegenden Erfindung wird erfindungsgemäß durch eine Scheibe mit Anschlusselement, ein Verfahren zu deren Herstellung und deren Verwendung gemäß den unabhängigen Ansprüchen 1, 12 und 13 gelöst. Bevorzugte Ausführungen gehen aus den Unteransprüchen hervor.

Die erfindungsgemäße Scheibe umfasst ein Substrat mit elektrisch leitfähiger Struktur auf mindestens einem Teilbereich des Substrats, ein elektrisches Anschlusselement auf mindestens einem Teilbereich der elektrisch leitfähigen Struktur und eine bleifreie Lotmasse, die das elektrische Anschlusselement in mindestens einem Teilbereich elektrisch leitend mit der elektrisch leitfähigen Struktur verbindet. Die bleifreie Lotmasse enthält dabei 58 Gewichtsprozente (Gew.-%) bis 62 Gew.-% Indium und 35 Gew.-% bis 38 Gew.-% Zinn. Insbesondere umfasst die erfindungsgemäße Lotmasse 58,0 Gew.-% bis 62,0 Gew.-% Indium und 35,0 Gew.-% bis 38,0 Gew.-% Zinn. Zinn dient aufgrund seiner mechanischen Eigenschaften und seiner guten Benetzungseigenschaften als wesentlicher Bestandteil des Lots und wird vor allem als Füllmaterial eingesetzt, wobei der Zinnanteil durch die Anteile der restlichen Komponenten bestimmt wird, so dass alle Komponenten in Summe 100 % ergeben. Die genaue Einhaltung des Indiumanteils ist hingegen enorm wichtig, da bereits kleine Variationen die Beschaffenheit der Lotmasse beeinflussen und die besonders vorteilhaften Eigenschaften der Lotmasse nur im angegebenen Bereich auftreten.

Die bleifreie Lotmasse ist nach der EG-Richtlinie "2002/95/EG zur Beschränkung der Verwendung bestimmter gefährlicher Stoffe in Elektro- und Elektronikgeräten" als Alternative zu bleihaltigen Loten einsetzbar und enthält maximal den richtlinienkonformen Grenzwert von 0,1 Gew.-% Blei, bevorzugt kein Blei. Dies ist besonders vorteilhaft im Hinblick auf die Umweltverträglichkeit der erfindungs gemäßen Scheibe. Bleifreie Lotmassen weisen typischerweise eine geringere Duktilität auf als bleihaltige Lotmassen, so dass mechanische Spannungen zwischen Anschlusselement und Scheibe im Allgemeinen weniger gut kompensiert werden können. Es hat sich jedoch gezeigt, dass die erfindungsgemäße bleifreie Lotmasse besonders gut für die Verarbeitung in Kombination mit Glassubstraten geeignet ist.

In einer besonders bevorzugten Ausführungsform der erfindungsgemäßen Scheibe enthält die bleifreie Lotmasse 59 Gew.-% bis 61 Gew.-% Indium und 35 Gew.-% bis 38 Gew.-% Zinn.

Der bleifreien Lotmasse werden 1 Gew.-% bis 3,5 Gew.-% Silber (insbesondere 1,0 Gew.-% bis 3,5 Gew.-% Silber), bevorzugt 1,5 Gew.-% bis 3 Gew.-% Silber (insbesondere 1,5 Gew.-% bis 3,0 Gew.-% Silber) zugesetzt. Silber vermindert zum einen die Migration von Silberatomen aus den angrenzenden Materialien, wie beispielsweise der leitfähigen Struktur, ins Lot. Andererseits erhöht der Zusatz von Silber die mechanische Festigkeit der bleifreien Lotmasse und hilft durch Temperaturschwankungen bedingte Ermüdungserscheinungen zu vermeiden.

Der bleifreien Lotmasse wird erfindungsgemäß 1,2 Gew.-% bis 1,7 Gew.-% Kupfer, insbesondere 1,4 Gew.-% bis 1,6 Gew.-% Kupfer, zugesetzt. Dieser Kupferanteil bewirkt eine Senkung des Schmelzpunktes, erhöht die Alterungsbeständigkeit gegen Temperaturschwankungen und verbessert die Benetzungseigenschaften des Lots. Bei Verwendung von kupferhaltigen Bauteilen, die im direkten Kontakt zur Lotmasse stehen, verhindert der Kupferanteil des Weiteren die Migration von Kupferatomen aus den entsprechenden Bauteilen ins Lot.

Ferner kann auch Nickel in der bleifreien Lotmasse enthalten sein, wobei Nickel in einem Anteil von maximal 1 Gew.-% eingesetzt wird. Nickel dient dabei der Vermeidung von intermetallischen Phasen, wie beispielsweise Ag₆Sn und Ag₃Sn, die das Lot härter und spröder werden lassen. Zu diesem Zweck genügt bereits ein Nickelanteil von 0,1 Gew.-% bis 0,2 Gew.-%. Der Nickelanteil kann jedoch auch 0 Gew.-% betragen.

Des Weiteren können Bismut, Zink, Antimon, Gold, Aluminium, Arsen, Cadmium, Chrom, Kohlenstoff, Mangan, Niob, Titan, Germanium, Eisen und/oder Phosphor in der bleifreien Lotmasse enthalten sein, wobei die maximalen Anteile an Cadmium und Chrom den Grenzwerten nach EG-Richtlinie 2002/95/EG genügen.

Die erfindungsgemäße Lotmassenzusammensetzung enthält ganz besonders bevorzugt In60Sn36,5Ag2,0Cul,5, In60Sn36,4Ag2,0Cul,5Ni0,1, In59Sn36,5Ag3,5Cul,0, In61Sn35,5Ag2,0Cul,5, In61Sn37,5Ag1,0Cu0,5, In60Sn37,4Ag2,5Ni0,1, insbesondere In60Sn36,5Ag2,0Cul,5.

Die produktionsbedingte Schwankungsbreite der Lotzusammensetzung beträgt 1 % bezogen auf die jeweils eingesetzten Gesamtmengen der Einzelkomponenten.

Das Substrat enthält bevorzugt Glas, besonders bevorzugt Flachglas, Floatglas, Quarzglas, Borosilikatglas und/oder Kalk-Natron-Glas. Alternativ kann das Substrat Polymere, bevorzugt Polyethylen, Polypropylen, Polycarbonat, Polymethylmethacrylat und/oder Gemische davon enthalten.

Das Anschlusselement umfasst bevorzugt Kupfer, Zink, Titan, Eisen, Nickel, Kobalt, Molybdän, Zinn, Mangan und/oder Chrom und/oder Legierungen davon, wie beispielsweise Messing, Bronze, Stahl, Neusilber, Konstantan, Invar, Kovar. Besonders bevorzugt enthält das Anschlusselement Stahl, insbesondere Edelstahl, beispielsweise den unter dem Handelsnamen "Nirosta" vertriebenen rostfreien Edelstahl. In einer alternativen Ausführungsform enthält das Anschlusselement 58,0 Gew.-% bis 99,9 Gew.-% Kupfer sowie 0 Gew.-% bis 37 Gew.-% Zink. Als Beispiel sei hier die Messinglegierung Cu70Zn30 genannt. Die besonders vorteilhafte Zusammensetzung der erfindungsgemäßen bleifreien Lotmasse ermöglicht jedoch die Verwendung der verschiedensten Materialien als Anschlusselement. Je nach Material des Anschlusselements wird auch die Zusammensetzung der erfindungsgemäßen Lotmasse angepasst um einerseits eine optimale Haftung des Anschlusselements zu gewährleisten und andererseits die Materialkosten möglichst gering zu halten. Bei Anschlusselementen mit hohem Kupferanteil müssen indiumreiche Lotzusammensetzungen verwendet werden, während beispielsweise bei Edelstahl-Anschlusselemementen auch indiumärmere Lotzusammensetzungen eingesetzt werden können. Ein im Rahmen der erfindungsgemäßen Lotmassenzusammensetzung indiumarmes Lot führt somit in Verbindung mit einem Anschlusselement aus Edelstahl zu einer deutlichen Reduktion der Materialkosten, da der Anteil an teuerem Indium gesenkt werden kann. Ein solcher synergetischer Effekt zwischen Anschlusselement und Lot ist nur durch eine genaue Abstimmung der Materialien des Anschlusselements und der Lotzusammensetzung zu erreichen. Die erfindungsgemäße Lotmasse weist bei Verwendung mit einem Edelstahlanschlusselement eine sehr gute Verarbeitbarkeit und Stabilität auf.

Um eine möglichst hohe Widerstandsfähigkeit der Lötverbindung gegenüber Temperaturschwankungen zu erreichen sollten die thermischen Ausdehnungskoeffizienten der beteiligten Lötpartner sowie des Lots in der gleichen Größenordnung liegen. Aus diesem Grund ist die Verwendung von Edelstahl-Anschlusselementen empfehlenswert, da diese ähnliche Ausdehnungskoeffizienten wie die erfindungsgemäße Lotmasse aufweisen. Eine Scheibe umfassend ein Substrat aus Natron-Kalk-Glas, ein Anschlusselement aus Edelstahl und die erfindungsgemäße Lotmassenzusammensetzung ist somit besonders vorteilhaft im Hinblick auf die Stabilität der Lötverbindung bei Temperaturschwankungen.

Das Anschlusselement trägt bevorzugt eine Beschichtung, besonders bevorzugt eine silberhaltige Beschichtung oder nickelhaltige Beschichtung. Die Beschichtung hat dabei vorzugsweise eine Dicke von 2 µm bis 5 µm. Insbesondere werden versilberte oder vernickelte Anschlusselemente verwendet, wobei die Versilberung bzw. Vernickelung die Oberflächengüte, den Leitwert und die Benetzbarkeit der Oberfläche verbessert. Besonders Anschlusselemente aus Edelstahl werden bevorzugt versilbert oder vernickelt.

Die erfindungsgemäße Scheibe kann Anschlusselemente verschiedenster Formen umfassen, beispielsweise brückenförmige Anschlusselemente, die an zwei oder mehr Flächen die elektrisch leitfähige Struktur kontaktieren, oder auch plattenförmige Anschlusselemente, die über eine durchgehende Auflagefläche mit der elektrisch leitfähigen Struktur verbunden werden.

Das Anschlusselement weist mindestens eine Kontaktfläche auf, über die das Anschlusselement mittels der bleifreien Lotmasse vollflächig mit einem Teilbereich der elektrisch leitfähigen Struktur verbunden ist.

In mindestens einem Teilbereich der Scheibe ist eine elektrisch leitfähige Struktur aufgebracht, die bevorzugt Silber, besonders bevorzugt Silberpartikel und Glasfritten enthält. Die erfindungsgemäße elektrisch leitfähige Struktur weist bevorzugt eine Schichtdicke von 3 µm bis 40 µm, besonders bevorzugt von 5 µm bis 20 µm, ganz besonders bevorzugt von 7 µm bis 15 µm und insbesondere von 8 µm bis 12 µm auf. Das Anschlusselement ist über eine Kontaktfläche vollflächig mit einem Teilbereich der elektrisch leitfähigen Struktur verbunden.

Die elektrische Kontaktierung erfolgt dabei mittels der bleifreien Lotmasse. Die elektrisch leitfähige Struktur kann beispielsweise der Kontaktierung von auf der Scheibe angebrachten Drähten oder einer Beschichtung dienen. Dabei ist die elektrisch leitfähige Struktur beispielsweise in Form von Sammelleitern an gegenüberliegenden Rändern der Scheibe angebracht. Über die auf den Sammelleitern angebrachten Anschlusselemente kann eine Spannung angelegt werden, wodurch ein Strom durch die leitfähigen Drähte bzw. die Beschichtung von einem Sammelleiter zum anderen fließt und die Scheibe erwärmt. Alternativ zu einer solchen Heizfunktion ist die erfindungsgemäße Scheibe auch in Kombination mit Antennenleitern verwendbar oder auch in beliebigen anderen Ausgestaltungen, bei denen eine stabile Kontaktierung der Scheibe benötigt wird, denkbar.

Die bleifreie Lotmasse tritt aus dem Zwischenraum zwischen Anschlusselement und elektrisch leitfähiger Struktur hervor, wobei das Lot einen konkaven Meniskus beschreibt und sich so eine homogene Lotkehle bildet. Eine solche homogene Lotkehle ist vor allem den außerordentlich guten Benetzungseigenschaften der erfindungsgemäßen Lotzusammensetzung zuzuschreiben. Die Ausbildung homogener Lotkehlen stellt ein Qualitätskriterium für die Lotverbindung dar, da in diesem Fall auch eine homogene Verteilung des Lots im Spalt zwischen Anschlusselement und elektrisch leitfähiger Struktur angenommen werden kann. Tritt das Lot ungleichmäßig in Form von Lotperlen aus dem Spalt aus, so können diese Lotperlen zu einer Beschädigung der Oberfläche der elektrisch leitfähigen Struktur führen. Um auch bei Loten mit schlechten Benetzungseigenschaften eine gute Lötverbindung zu gewährleisten werden diese oft in großen Mengen eingesetzt, so dass sich eine hohe Lotdicke ergibt. Dabei ist jedoch auch die Gefahr eines Lotmassenübertritts groß. Dabei treten nicht nur die beschriebenen Lotperlen auf, sondern die Lotmasse kann sich ferner auch an den Seitenflächen des Anschlusselements hinauf bis zu dessen Oberfläche wölben, so dass die Seiten des Anschlusselements vollkommen von Lotmasse umschlossen sind. Derartige Lotverbindungen erweisen sich jedoch bei Temperaturschwankungen als extrem instabil. Die guten Benetzungseigenschaften des erfindungsgemäßen Lots sind somit äußerst vorteilhaft in Bezug auf die Stabilität und Qualität der Lotverbindung, sowie ferner im Hinblick auf einen ressourcenschonenden und kosteneffizienten Umgang mit Rohstoffen.

Die Form des elektrischen Anschlusselementes kann Lotdepots im Zwischenraum von Anschlusselement und elektrisch leitfähiger Struktur ausbilden. Die Lotdepots und Benetzungseigenschaften des Lotes am Anschlusselement verhindern den Austritt der Lotmasse aus dem Zwischenraum. Lotdepots können rechtwinklig, verrundet oder polygonal ausgestaltet sein.

Um eine gleichmäßige Schichtdicke der bleifreien Lotmasse zu erreichen kann das Anschlusselement über Abstandshalter auf seiner Kontaktfläche verfügen. Dabei können ein oder mehrere Abstandshalter, bevorzugt mindestens zwei Abstandshalter, besonders bevorzugt mindestens drei Abstandshalter auf der Kontaktfläche angebracht sein. Die Abstandshalter haben bevorzugt eine Breite von 0,1 mm bis 3 mm und eine Höhe von 0,05 mm bis 1 mm, besonders bevorzugt eine Breite von 0,3 mm bis 1 mm und eine Höhe von 0,2 mm bis 0,4 mm. Die Abstandshalter entsprechen in ihrer Zusammensetzung bevorzugt der Zusammensetzung des Anschlusselementes selbst und können in verschiedensten Formen ausgestaltet sein, beispielsweise würfelförmig, pyramidenförmig oder auch als Kugelsegmente oder Segmente eines Ellipsoids. Die Abstandshalter sind bevorzugt einstückig mit dem Anschlusselement ausgebildet, beispielsweise durch Umformen eines Anschlusselements mit ursprünglich planarer Kontaktfläche beispielsweise durch Prägen oder Tiefziehen.

Die Schichtdicke der bleifreien Lotmasse ist bevorzugt kleiner oder gleich 600 µm, besonders bevorzugt kleiner 300 µm.

Das Einbringen der Energie beim elektrischen Verbinden von elektrischem Anschlusselement und elektrisch leitfähiger Struktur erfolgt bevorzugt mit Stempel, Thermoden, Kolbenlöten, Microflammlöten, bevorzugt Laserlöten, Heißluftlöten, Induktionslöten, Widerstandslöten und/oder mit Ultraschall.

Die Erfindung umfasst des Weiteren ein Verfahren zur Herstellung der erfindungsgemäßen Scheibe, wobei die bleifreie Lotmasse zunächst auf den Kontaktflächen des Anschlusselements aufgebracht wird. Bevorzugt wird die bleifreie Lotmasse als Plättchen, Kugel, Kegel, Zylinder oder Ellipsoid oder auch als Segment dieser Körper mit festgelegter Schichtdicke, Volumen und Form eingesetzt, wobei die Lotmenge so ausgelegt wird, dass ein Austreten der Lotmasse während des Lötvorgangs möglichst vermieden wird. Auf einem Bereich des Substrats wird daraufhin eine elektrisch leitfähige Struktur aufgebracht und das Anschlusselement gemeinsam mit der bleifreien Lotmasse auf der elektrisch leitfähigen Struktur angeordnet. Anschließend wird das Anschlusselement mit der elektrisch leitfähigen Struktur durch Löten verbunden. Beim Lötvorgang werden halogenfreie Flussmittel *(No Clean Flux*) in der allgemein üblichen Form eingesetzt. Das Flussmittel kann beispielsweise im Inneren eines Lotdepots enthalten sein oder direkt an den Kontaktflächen zwischen Lotmasse und Anschlusselement bzw. elektrisch leitfähiger Struktur aufgebracht werden.

Bevorzugt wird vor dem Aufbringen der elektrisch leitfähigen Struktur ein Schwarzdruck auf den Randbereich der Scheibe appliziert, so dass dieser nach Montage der Scheibe die Anschlusselemente verdeckt.

Das Anschlusselement wird nach Installation auf der Scheibe mit einem Blech, einer Litze oder einem Geflecht, beispielsweise aus Kupfer, verschweißt oder gecrimpt und mit der Bordelektronik verbunden.

Die Erfindung umfasst ferner die Verwendung der erfindungsgemäßen Scheibe mit elektrisch leitfähigen Strukturen in Fahrzeugen, Architekturverglasung oder Gebäudeverglasung, insbesondere in Kraftfahrzeugen, Schienenfahrzeugen, Flugzeugen oder Seefahrzeugen. Dabei dient ein Anschlusselement der Verbindung von elektrisch leitfähigen Strukturen der Scheibe, wie beispielsweise Heizleitern oder Antennenleitern, mit externen elektrischen Systemen, wie beispielsweise Verstärkern, Steuereinheiten oder Spannungsquellen.

Im Folgenden wird die Erfindung anhand einer Zeichnung näher erläutert. Die Zeichnung schränkt die Erfindung in keiner Weise ein.

Es zeigen:
Figur 1 eine Ausführung der erfindungsgemäßen Scheibe mit Anschlusselement.
Figur 2 einen Schnitt A-A' durch die erfindungsgemäße Scheibe mit Anschlusselement gemäß Figur 1.
Figur 3 einen Schnitt A-A' durch eine Scheibe mit Anschlusselement gemäß dem Stand der Technik.
Figur 4 eine alternative Ausführungsform der erfindungsgemäßen Scheibe.
Figur 5 die erfindungsgemäße bleifreie Lotzusammensetzung.
Figur 6 ein Fließschema des erfindungsgemäßen Verfahrens.

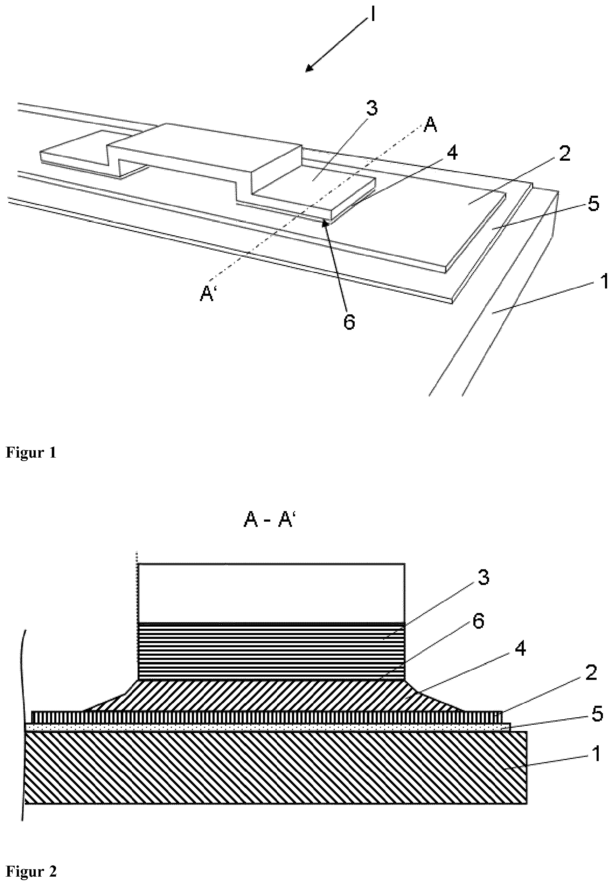

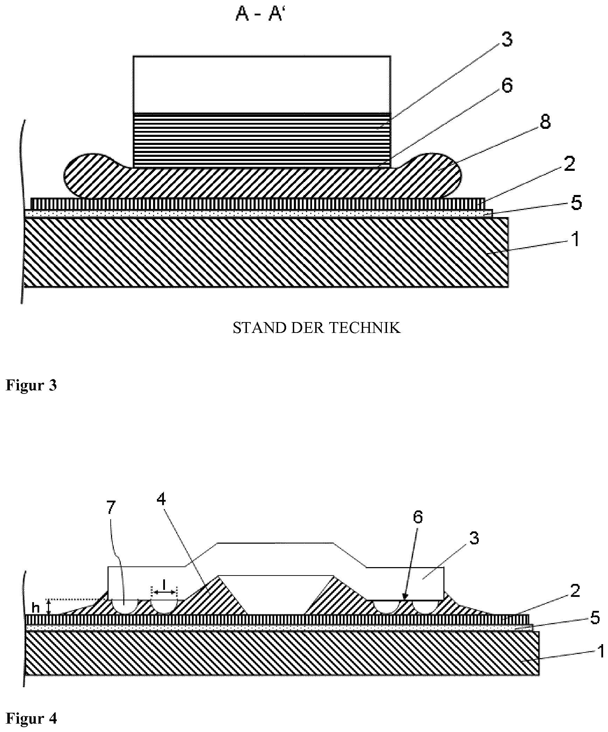

Figur 1 zeigt eine erfindungsgemäße Scheibe (I) mit Anschlusselement (3). Auf einem Substrat (1) aus einem 3 mm dicken thermisch vorgespannten Einscheibensicherheitsglas aus Natron-Kalk-Glas ist ein Abdecksiebdruck (5) aufgebracht. Das Substrat (1) weist eine Breite von 150 cm und eine Höhe von 80 cm auf, wobei an der kürzeren Seitenkante im Bereich des Abdecksiebdrucks (5) ein Anschlusselement (3) angebracht ist. Auf der Oberfläche des Substrats (1) ist eine elektrisch leitfähige Struktur (2) in Form einer Heizleiterstruktur appliziert. Die elektrisch leitfähige Struktur enthält Silberpartikel und Glasfritten, wobei der Silberanteil größer als 90 % beträgt. Im Randbereich der Scheibe (I) ist die elektrisch leitfähige Struktur (2) auf 10 mm verbreitert. In diesem Bereich ist eine bleifreie Lotmasse (4) aufgebracht, die die elektrisch leitfähige Struktur (2) mit einer Kontaktfläche (6) des Anschlusselements (3) verbindet. Die Kontaktierung wird nach der Montage in der Fahrzeugkarosserie durch den Abdecksiebdruck (5) verdeckt. Die bleifreie Lotmasse (4) stellt eine dauerhafte elektrische und mechanische Verbindung der elektrisch leitfähigen Struktur (2) mit dem Anschlusselement (3) sicher. Die bleifreie Lotmasse (4) ist durch ein vorgegebenes Volumen und vorgegebene Form vollständig zwischen dem elektrischen Anschlusselement (3) und der elektrisch leitfähigen Struktur (2) angeordnet. Die bleifreie Lotmasse (4) enthält 60 Gew.-% Indium, 36,5 Gew.-% Zinn, 2,0 Gew.-% Silber und 1,5 Gew.-% Kupfer. Bei dieser beispielhaften bleifreien Lotmasse (4) wird eine möglichst genaue Zusammensetzung von 60,00 Gew.-% Indium, 36,50 Gew.-% Zinn, 2,00 Gew.-% Silber und 1,50 Gew.-% Kupfer gewählt. Die bleifreie Lotmasse (4) hat eine Dicke von 250 µm. Das elektrische Anschlusselement (3) besteht aus Edelstahl. Das elektrische Anschlusselement (3) hat eine Breite von 4 mm und eine Länge von 24 mm. Überraschenderweise zeigt die Kombination aus erfindungsgemäßer bleifreier Lotmasse (4) und Edelstahl-Anschlusselement eine gute Stabilität und Qualität der Lotverbindung. Es konnte gezeigt werden, dass die Eigenschaften indiumreicherer Lote (wie beispielsweise In65Sn30Ag4.5Cu0.5) bezüglich Stabilität und Qualität der Lotverbindung auch mit einem indiumärmeren Lot (In60Sn36,5Ag2Cul,5) mindestens erreicht werden können. Indiumärmere Lote sind dabei jedoch vorteilhaft im Hinblick auf einen ressourcenschonenden und kosteneffizienten Umgang mit Rohstoffen. Ferner zeigt die erfindungsgemäße Lotmasse ein verbessertes Benetzungsverhalten (s. Fig. 2 und Fig. 3). Eine einfache Senkung des Indiumgehalts, wobei dieser durch einen Füllstoff wie Zinn ersetzt wird, genügt dabei nicht. Da die einzelnen Komponenten der Lotmasse miteinander in Interaktion stehen müssen bei Modifikation einer Komponente auch die Gehalte anderer Komponenten angepasst werden oder können andere bzw. weitere Komponenten nötig werden um ähnliche Eigenschaften zu erreichen. Somit ergibt sich bei der Suche nach neuen Lotmassen eine Vielzahl von Variablen, so dass einfache Versuchsreihen nicht ausreichen um dieses Problem zu lösen. Die genannten vorteilhaften Eigenschaften der Lotmassenzusammensetzung In60Sn36,5Ag2Cul,5 waren für den Fachmann überraschend und unerwartet.

Figur 2 zeigt einen Schnitt A-A' durch die erfindungsgemäße Scheibe (I) mit Anschlusselement (3) gemäß Figur 1. Die bleifreie Lotmasse (4) tritt seitlich aus dem Spalt zwischen elektrisch leitfähiger Struktur (2) und Anschlusselement (3) aus. Dabei bildet die erfindungsgemäße bleifreie Lotmasse (4) aufgrund ihrer sehr guten Benetzungseigenschaften einen konkaven Meniskus. Die Ausbildung einer solchen homogenen Lotkehle ist ein Anzeichen dafür, dass das Lot gute Fließ- und Benetzungseigenschaften aufweist und somit auch im Spalt zwischen Anschlusselement und elektrisch leitfähiger Struktur eine homogene Verteilung ohne Lunkerbildung vorliegt. Bei Lotmassen mit schlechteren Benetzungseigenschaften bilden sich häufig Lotperlen, die die elektrisch leitfähige Struktur beschädigen können, oder es kommt zu einem so starken Lotmassenaustritt, dass die Lotmasse die Seitenkanten des Anschlusselements komplett umschließt, was zu einer Schwächung der Lotverbindung führt. Diese Effekte können dank der hervorragenden Benetzungseigenschaften und des sehr guten Fließverhaltens der erfindungsgemäßen bleifreien Lotmasse (4) vollständig vermieden werden, wodurch sich enorme Vorteile bezüglich der Qualität und Stabilität der Lotverbindung ergeben. Des Weiteren kann die erfindungsgemäße bleifreie Lotmasse (4) aufgrund ihres besonders guten Fließverhaltens in einer wesentlich dünneren Schichtdicke verwendet werden, während die nach dem Stand der Technik bekannten Lotmassen in hohen Schichtdicken (oberhalb 600 µm) eingesetzt werden müssen um eine hinreichende Qualität der Lötverbindung zu garantieren. Mit der erfindungsgemäßen bleifreien Lotmasse (4) lässt sich im Gegensatz dazu die für eine bestimmte Anschlussgeometrie optimale Schichtdicke frei wählen, wobei auch bei dünnen Schichtdicken eine homogene Struktur erreicht wird. Eine Einsparung von Lotmasse ist ferner sinnvoll im Hinblick auf einen ressourcenschonenden und kosteneffizienten Umgang mit Rohstoffen.
Diese Ergebnisse waren für den Fachmann überraschend und unerwartet.

Figur 3 zeigt einen Schnitt A-A' durch eine nach dem Stand der Technik bekannte Scheibe (I) mit Anschlusselement (3). Die Lotmasse (8) nach dem Stand der Technik enthält dabei 65 Gew.-% Indium, 30 Gew.-% Zinn, 4,5 Gew-% Silber und 0,5 Gew-% Kupfer. Der generelle Aufbau der Scheibe bestehend aus einem Substrat (1), einem Abdecksiebdruck (5), einer elektrisch leitfähigen Struktur (2), einem Anschlusselement (3) und der Lotmasse (8) ist analog dem der erfindungsgemäßen Scheibe. Die Lotmasse (8) ist auf der elektrisch leitfähigen Struktur (2) aufgetragen und verbindet diese mit der Kontaktfläche (6) des Anschlusselements (3). Aufgrund der schlechten Benetzungseigenschaften der Lotmasse (8) quillt diese tropfenförmig aus dem Spalt zwischen elektrisch leitfähiger Struktur (2) und Anschlusselement (3) heraus, wobei sich ein konvexer Meniskus bildet. Dabei entstehen Lotperlen, die eine Beschädigung der Silberschicht hervorrufen können und so zu einem Versagen der Lötverbindung beitragen. Ein solch ungünstiges Benetzungsverhalten der Lotmasse (8) bringt neben diesem unkontrollierbaren Herausquellen aus dem Spalt auch eine schlechte Homogenität mit sich.

Figur 4 zeigt in Fortführung des Ausführungsbeispiels der Figuren 1 und 2 eine alternative Ausgestaltung der erfindungsgemäßen Scheibe (I) mit Anschlusselement (3), wobei das Anschlusselement (3) über Abstandshalter (7) auf der Kontaktfläche (6) verfügt. Das Anschlusselement (3) weist einen brückenförmigen Aufbau ähnlich dem in Figur 1 gezeigten Anschlusselement auf, wobei zwei Flächen des Anschlusselements (3) schräg zur Substratoberfläche ausgestaltet sind. Als Kontaktfläche (6), die mit der bleifreien Lotmasse (4) in direktem Kontakt steht, werden in dieser Ausführungsform sowohl planare Abschnitte des Anschlusselements (3) als auch schräge Flächen verwendet. Die Abstandshalter (7) sind in den planaren Abschnitten des Anschlusselements (3) angeordnet und berühren die elektrisch leitfähige Struktur (2) direkt, so dass das Anschlusselement (3) in einem gleichmäßigen Abstand zu dieser gehalten wird. Dadurch wird die Ausbildung einer gleichmäßigen Lotmasseschicht begünstigt. Die halbkugelförmigen Abstandshalter (7) weisen eine Höhe h von 0,25 mm und eine Breite von 0,5 mm auf.

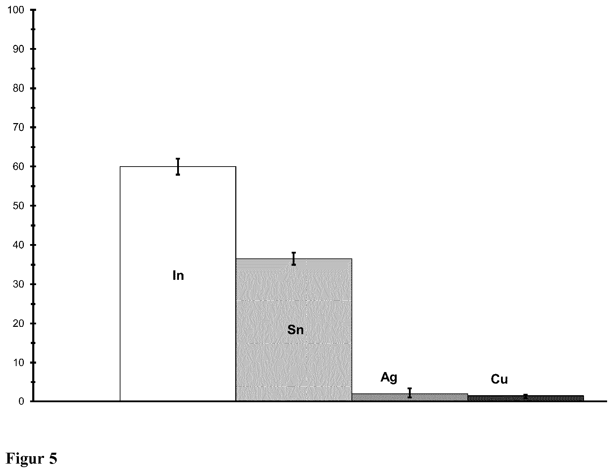

Figur 5 zeigt die erfindungsgemäße bleifreie Lotzusammensetzung. Die erfindungsgemäße bleifreie Lotmasse (4) enthält 58 Gew.-% bis 62 Gew.-% Indium, 35 Gew.-% bis 38 Gew.-% Zinn, 1 Gew.-% bis 3,5 Gew-% Silber und 0,5 Gew.-% bis 2,0 Gew.-% Kupfer. Je höher der Indiumgehalt der Lotzusammensetzung, desto niedriger der Schmelzpunkt und desto höher die Duktilität des Lots. Um möglichst optimale Verlaufseigenschaften bei gleichzeitig hoher Temperaturbeständigkeit zu erreichen sind Indiumanteile von 58 Gew.-% bis 62 Gew.-%, bevorzugt 59 Gew.-% bis 61 Gew.-%, besonders geeignet. Ganz besonders bevorzugt enthält die bleifreie Lotmasse (4) einen Indiumanteil von 59,5 Gew.-% bis 60,5 Gew.-%. Zinn dient in der erfindungsgemäßen bleifreien Lotmasse (4) vor allem als günstiges Füllmaterial mit guten Verlaufseigenschaften. Der Silberanteil der erfindungsgemäßen Lotmasse dient der Vermeidung einer Migration von Silberatomen aus der elektrisch leitfähigen Struktur (2) in die Lotmasse und senkt gleichzeitig den Schmelzpunkt. Im Hinblick auf diese unerwünschte Senkung des Schmelzpunktes und aus Kostengründen sollte der Silberanteil dabei jedoch möglichst niedrig gehalten werden. Ein Silberanteil von 1 Gew.-% bis 3,5 Gew.-%, bevorzugt 1,5 Gew.-% bis 3 Gew.-%, hat sich dabei als besonders geeignet erwiesen. Durch den Zusatz von Kupfer zur bleifreien Lotmasse (4) kann der Schmelzpunkt abschließend eingestellt werden. Kupfer sorgt ferner für eine gewisse Geschmeidigkeit des Lots und verhindert das Herauslösen der Kupferanteile des Lötpartners. Die erfindungsgemäße bleifreie Lotmasse (4) enthält zwischen 0,5 Gew.-% und 2 Gew.-% Kupfer, bevorzugt zwischen 0,8 Gew.-% und 1,8 Gew.-% Kupfer. Des Weiteren kann der Lotmasse ein geringer Anteil an Nickel, maximal 1 Gew.-%, bevorzugt zwischen 0,1 Gew.-% und 0,2 Gew.-% Nickel, zugesetzt werden. Dadurch wird die Bildung intermetallischer Phasen zwischen Zinn und Silber vermieden. Eine ganz besonders bevorzugte Lotzusammensetzung ist in Figur 5 in Form von Balken dargestellt und besteht aus 60,0 Gew.-% Indium, 36,5 Gew.-% Zinn, 2,0 Gew.-% Silber und 1,5 Gew.-% Kupfer.

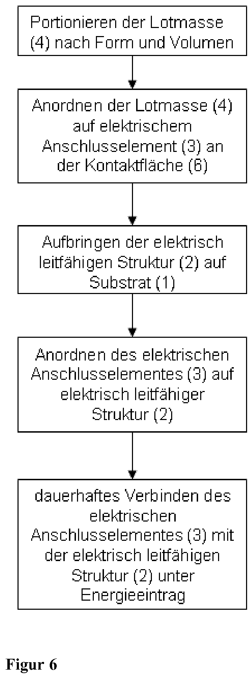

Figur 6 zeigt ein Fließschema des erfindungsgemäßen Verfahrens zur Herstellung der erfindungsgemäßen Scheibe (I) mit Anschlusselement (3). In einem ersten Schritt wird die bleifreie Lotmasse (4) portioniert und auf der Kontaktfläche (6) des elektrischen Anschlusselements (3) angeordnet. Auf das Substrat (1) wird eine elektrisch leitfähige Struktur (2) appliziert, beispielsweise in Form von aufgedruckten Drähten. Ein Bereich der elektrisch leitfähigen Struktur (2) wird dabei breiter ausgeformt, so dass die Abmaße dieses Bereiches mindestens den Abmaßen des Anschlusselements (3) entsprechen. Daraufhin wird das elektrische Anschlusselement (3) mit der bleifreien Lotmasse (4) auf der elektrisch leitfähigen Struktur (2), bevorzugt in deren breiter ausgeformtem Bereich, positioniert. Die bleifreie Lotmasse (4) kontaktiert dabei die elektrisch leitfähige Struktur (2). Durch Energieeintrag wird das elektrische Anschlusselement (3) dauerhaft elektrisch und mechanisch mit der elektrisch leitfähigen Struktur (2) verbunden.

### Bezugszeichenliste

- I: Scheibe
- 1: Substrat
- 2: elektrisch leitfähige Struktur
- 3: Anschlusselement
- 4: bleifreie Lotmasse
- 5: Abdecksiebdruck
- 6: Kontaktfläche
- 7: Abstandshalter
- 8: Lotmasse

- A-A': Schnittlinie
- h: Höhe des Abstandshalters 7
- 1: Breite des Abstandshalters 7

## Patentansprüche

1. Scheibe (I) mit mindestens einem Anschlusselement (3) mindestens umfassend
- ein Substrat (1) mit einer elektrisch leitfähigen Struktur (2) auf mindestens einem Teilbereich des Substrats (1),
- mindestens ein elektrisches Anschlusselement (3) auf mindestens einem Teilbereich der elektrisch leitfähigen Struktur (2) und
- eine bleifreie Lotmasse (4), die das elektrische Anschlusselement (3) in mindestens einem Teilbereich mit der elektrisch leitfähigen Struktur (2) verbindet,
wobei die bleifreie Lotmasse (4) 58 Gew.-% bis 62 Gew.-% Indium, 35 Gew.-% bis 38 Gew.-% Zinn, 1 Gew.-% bis 3,5 Gew.-% Silber, 1,2 Gew.-% bis 1,7 Gew.-% Kupfer und bis zu 1 Gew.-% Nickel enthält, wobei der Zinnanteil durch die Anteile der restlichen Komponenten bestimmt wird, so dass alle Komponenten in Summe 100% ergeben.

2. Scheibe (I) nach Anspruch 1, wobei die bleifreie Lotmasse (4) 1,4 Gew.-% bis 1,6 Gew.-% Kupfer enthält.

3. Scheibe (I) nach Anspruch 1 oder 2, wobei die bleifreie Lotmasse (4) 59 Gew.-% bis 61 Gew.-% Indium und 35 Gew.-% bis 38 Gew.-% Zinn enthält.

4. Scheibe (I) nach einem der Ansprüche 1 bis 3, wobei die bleifreie Lotmasse (4) 1,5 Gew.-% bis 3 Gew.-% Silber, enthält.

5. Scheibe (I) nach einem der Ansprüche 1 bis 4, wobei die bleifreie Lotmasse (4) 0,1 Gew.-% bis 0,2 Gew.-% Nickel, enthält.

6. Scheibe (I) nach einem der Ansprüche 1 bis 5, wobei das Substrat (1) Glas, bevorzugt Flachglas, Floatglas, Quarzglas, Borosilikatglas, Kalk-Natron-Glas, oder Polymere, bevorzugt Polyethylen, Polypropylen, Polycarbonat, Polymethylmethacrylat und/oder Gemische davon, enthält.

7. Scheibe (I) nach einem der Ansprüche 1 bis 6, wobei das Anschlusselement (3) Kupfer, Zink, Titan, Eisen, Nickel, Kobalt, Molybdän, Zinn, Mangan und/oder Chrom und/oder Legierungen davon enthält.

8. Scheibe (I) nach Anspruch 7, wobei das Anschlusselement (3) Stahl, bevorzugt Edelstahl enthält.

9. Scheibe (I) nach einem der Ansprüche 1 bis 8, wobei die elektrisch leitfähige Struktur (2) Silber enthält.

10. Scheibe (I) nach einem der Ansprüche 1 bis 9, wobei das Anschlusselement (3) über eine Kontaktfläche (6) vollflächig mit einem Teilbereich der elektrisch leitfähigen Struktur (2) verbunden ist.

11. Scheibe (I) nach einem der Ansprüche 1 bis 10, wobei die Schichtdicke der bleifreien Lotmasse (4) kleiner oder gleich 600 µm ist.

12. Verfahren zur Herstellung einer Scheibe (I) nach einem der Ansprüche 1 bis 11, wobei
a) auf der Unterseite des Anschlusselements (3) bleifreie Lotmasse (4) aufgebracht wird,
b) eine elektrisch leitfähige Struktur (2) auf einem Substrat (1) aufgebracht wird,
c) das Anschlusselement (3) mit der Lotmasse (4) auf der elektrisch leitfähigen Struktur (2) angeordnet wird und
d) das Anschlusselement (3) mit der elektrisch leitfähigen Struktur (2) verlötet wird.

13. Verwendung einer Scheibe (I) nach einem der Ansprüche 1 bis 11, als Scheibe mit elektrisch leitfähigen Strukturen, bevorzugt mit Heizleitern und/oder Antennenleitern, für Fahrzeuge, Flugzeuge, Schiffe, Architekturverglasung und Gebäudeverglasung.

## Claims

1. Pane (I) with at least one connection element (3) at least comprising
- a substrate (1) with an electrically conductive structure (2) on at least one subregion of the substrate (1),
- at least one electrical connection element (3) on at least one subregion of the electrically conductive structure (2), and
- a leadfree soldering compound (4), which connects the electrical connection element (3) to the electrically conductive structure (2) in at least one subregion,
wherein the leadfree soldering compound (4) contains 58 wt.-% to 62 wt.-% indium, 35 wt.-% to 38 wt.-% tin, 1 wt.-% to 3.5 wt.-% silver, 1.2 wt.-% to 1,7 wt.-% copper, up to 1 wt.-% nickel, wherein the tin content is determined by the contents of the remaining components such that all components total 100%.

2. Pane (I) according to claim 1, wherein the leadfree soldering compound (4) contains 1.4 wt.-% to 1.6 wt.-% copper.

3. Pane (I) according to claim 1 or 2, wherein the leadfree soldering compound (4) contains 59 wt.-% to 61 wt.-% indium, and 35 wt.-% to 38 wt.-% tin.

4. Pane (I) according to one of claims 1 through 3, wherein the leadfree soldering compound (4) contains 1.5 wt.-% to 3 wt.-% silver.

5. Pane (I) according to one of claims 1 through 4, wherein the leadfree soldering compound (4) contains 0.1 wt.-% to 0.2 wt.-% nickel.

6. Pane (I) according to one of claims 1 through 5, wherein the substrate (1) contains glass, preferably flat glass, float glass, quartz glass, borosilicate glass, soda lime glass, or polymers, preferably polyethylene, polypropylene, polycarbonate, polymethyl methacrylate, and/or mixtures thereof.

7. Pane (I) according to one of claims 1 through 6, wherein the connection element (3) contains copper, zinc, titanium, iron, nickel, cobalt, molybdenum, tin, manganese, and/or chromium and/or alloys thereof.

8. Pane (I) according to claim 7, wherein the connection element (3) contains steel, preferably stainless steel.

9. Pane (I) according to one of claims 1 through 8, wherein the electrically conductive structure (2) contains silver.

10. Pane (I) according to one of claims 1 through 9, wherein the connection element (3) is connected over its entire area to a subregion of the electrically conductive structure (2) via a contact surface (6).

11. Pane (I) according to one of claims 1 through 10, wherein the layer thickness of the leadfree soldering compound (4) is less than or equal to 600 µm.

12. Method for producing a pane (I) according to one of claims 1 through 11, wherein
a) leadfree soldering compound (4) is applied to the bottom of the connection element (3),
b) an electrically conductive structure (2) is applied to a substrate (1),
c) the connection element (3) with the soldering compound (4) is arranged on the electrically conductive structure (2), and
d) the connection element (3) is soldered to the electrically conductive structure (2).

13. Use of a pane (I) according to one of claims 1 through 11, as a pane with electrically conductive structures, preferably with heating conductors and/or antenna conductors, for motor vehicles, aircraft, ships, architectural glazing, and structural glazing.

## Revendications

1. Vitre (I) avec au moins un élément de raccordement (3) comprenant au moins
- un substrat (1) avec une structure conductrice d'électricité (2) sur au moins une partie du substrat (1),
- au moins un élément de raccordement électrique (3) sur au moins une partie de la structure conductrice d'électricité (2) et
- une masse de soudure sans plomb (4) qui relie l'élément de raccordement électrique (3) au moins sur une zone partielle avec la structure conductrice d'électricité (2),
où la masse de soudure sans plomb (4) contient de 58 % à 62% en poids d'indium, de 35% à 38% en en poids d'étain, de 1% à 3,5% en en poids d'argent, de 1,2% à 1,7% en poids de cuivre et jusqu'à 1% en poids de nickel, où la part de l'étain est déterminée par les parts des autres composants, afin que la somme de tous les composants fait 100 %.

2. Vitre (I) selon la revendication 1, où la masse de soudure sans plomb (4) contient de 1,4% à 1,6% en poids de cuivre.

3. Vitre (I) selon la revendication 1 ou 2, où la masse de soudure sans plomb (4) contient de 59% à 61% en poids d'indium et de 35% à 38% en en poids d'étain.

4. Vitre (I) selon l'une des revendications 1 à 3, où la masse de soudure sans plomb (4) contient de 1,5% à 3% en poids d'argent.

5. Vitre (I) selon l'une des revendications 1 à 4, où la masse de soudure sans plomb (4) contient de 0,1% à 0,2% en poids de nickel.

6. Vitre (I) selon l'une des revendications 1 à 5, où le substrat (1) contient du verre, de préférence du verre plat, du verre flottée, du verre de quartz, du verre borosilicaté, du verre sodocalcique, ou des polymères, de préférence du polyéthylène, du polypropylène, du polycarbonate, du polyméthacrylate de méthyle ou des copolymères ou des mélanges de ceux-ci.

7. Vitre (I) selon l'une des revendications 1 à 6, où l'élément de raccordement (3) contient du cuivre, du zinc, du titane, du fer, du nickel, du cobalt, du molybdène, de l'étain, du manganèse et/ou du chrome et/ou des alliages de ceux-ci.

8. Vitre (I) selon la revendication 7, où l'élément de raccordement (3) contient de l'acier, de préférence de l'acier inoxydable.

9. Vitre (I) selon l'une des revendications 1 à 8, où la structure conductrice d'électricité (2) contient de l'argent.

10. Vitre (I) selon l'une des revendications 1 à 9, où l'élément de raccordement (3) est relié sur toute sa surface par une surface de contact (6) à une zone partielle de la structure conductrice d'électricité (2).

11. Vitre (I) selon l'une des revendications 1 à 10, où l'épaisseur de la masse de soudure sans plomb (4) est inférieure ou égale à 600 µm.

12. Procédé de fabrication d'une vitre (I) selon l'une des revendications 1 à 11, où
a) masse de soudure sans plomb (4) est appliqué sur le dessous de l'élément de raccordement,
b) une structure conductrice d'électricité (2) est appliquée sur un substrat (1),
c) l'élément de raccordement (3) est disposé avec la masse de soudure sans plomb (4) sur la structure conductrice (2) et
d) l'élément de raccordement (3) est soudé sur la structure conductrice d'électricité (2).

13. Utilisation d'une vitre (I) selon l'une des revendications 1 à 11, comme vitre avec des structures conductrices d'électricité, de préférence avec des conducteurs chauffants et/ou des conducteurs d'antenne, pour les véhicules, les aéronefs, les navires, le vitrage pour l'architecture et le vitrage pour le bâtiment.
